# FASCICULE DE BREVET EUROPEEN

(11) **EP 4 334 911 B1**
(45) Date de publication et mention de la délivrance du brevet: **09.09.2026**
(21) Numéro de dépôt: 22724822.6
(22) Date de dépôt: 04.05.2022
(51) Int. Cl.: G06V 20/69

(54) **PROCÉDÉ ET DISPOSITIF MÉDICAL DE TRAITEMENT D'IMAGES MÉDICALES MICRO-ONDES AU MOYEN DE DESCRIPTEURS DE FORME 3D ET DE CARACTÉRISTIQUES DE TEXTURE AFIN DE CARACTÉRISER DES LÉSIONS DANS DES TISSUS IMAGÉS**
MEDIZINISCHE VORRICHTUNG UND VERFAHREN ZUR VERARBEITUNG MEDIZINISCHER MIKROWELLENBILDER MIT DESKRIPTOREN VON 3D-FORM UND TEXTUREIGENSCHAFTEN ZUR CHARAKTERISIERUNG VON LÄSIONEN IN ABGEBILDETEN GEWEBEN
MICROWAVE MEDICAL IMAGE PROCESSING METHOD AND DEVICE WITH 3D SHAPE AND TEXTURE DESCRIPTORS TO IDENTIFY LESIONS IN TISSUES

(30) Priorité: 04.05.2021 FR 2104691
(43) Date de publication de la demande: 13.03.2024
(73) Titulaire: MVG Industries, 91140 Villejust (FR)
(72) Inventeur: FASOULA, Agathi, 91140 VILLEJUST (FR)
(74) Mandataire: Regimbeau
(86) Numéro de dépôt international: PCT/FR2022/050864
(87) Numéro de publication internationale: WO 2022/234234

(56) Documents cités:
- EVANGELIA I. ZACHARAKI ET AL: "Classification of brain tumor type and grade using MRI texture and shape in a machine learning scheme", MAGNETIC RESONANCE IN MEDICINE, vol. 62, no. 6, 31 December 2009 (2009-12-31), pages 1609 - 1618, XP055156156, ISSN: 0740-3194, DOI: 10.1002/mrm.22147
- LOUGHLIN DECLAN O ET AL: "Microwave Breast Imaging: Clinical Advances and Remaining Challenges", IEEE TRANSACTIONS ON BIOMEDICAL ENGINEERING, IEEE, USA, vol. 65, no. 11, 30 November 2018 (2018-11-30), pages 2580 - 2590, XP011691960, ISSN: 0018-9294, [retrieved on 20181017], DOI: 10.1109/TBME.2018.2809541
- M. LAZEBNIKL. MCCARTNEYD. POPOVICC.B. WATKINSM.J. LINDSTROMJ. HARTERS. SEWALLA. MAGLIOCCOJ.H. BOOSKEM. OKONIEWSKI: "A large-scale study of the ultrawideband microwave dielectric properties of normal breast tissue obtained from réduction surgeries", PHYS. MED. BIOL., 31 December 2007 (2007-12-31), XP002804950

## Description

### DOMAINE TECHNIQUE

L'invention concerne le domaine de l'imagerie médicale utilisant les ondes électromagnétiques dans la bande des fréquences micro-ondes et concerne plus particulièrement l'imagerie médicale pour l'analyse de tissus ou d'organes humains perméables aux ondes électromagnétiques. Et l'invention trouve notamment application dans l'imagerie du sein et la détection des pathologies mammaires.

### ETAT DE LA TECHNIQUE

Les techniques d'imagerie micro-ondes permettent d'imager des organes humains perméables aux ondes électromagnétiques et sont des techniques prometteuses dans le domaine de l'imagerie du sein et la détection de pathologies telle que les cancers du sein. L'article de EVANGELIA I. ZACHARAKI ET AL: "Classification of brain tumor type and grade using MRI texture and shape in a machine learning scheme",MAGNETIC RESONANCE IN MEDICINE, vol. 62, no. 6, 31 décembre 2009 (2009-12-31), pages 1609-1618, ISSN: 0740-3194, DOI: 10.1002/mrm.22147 divulgue une procédé de traitement d'images médicale pour la classification de tumeurs cérébrales.

L'imagerie micro-ondes met en œuvre des sondes d'émission configurées pour éclairer tout ou partie de l'organe à imager au moyen d'ondes électromagnétiques. Les ondes émises traversent la zone à imager et sont reçues par des sondes de réception. Les sondes peuvent, de manière complémentaire, être configurées pour émettre et recevoir simultanément. Les ondes reçues ont traversé la zone à imager en ayant subi des réflexions sur les obstacles rencontrés, aux endroits des contrastes diélectriques (par exemples une lésion cancéreuse située dans des tissus sains). L'ensemble des coefficients de transmission ainsi mesurés entre les sondes émettrices et les sondes réceptrices permettent de reconstruire une image micro-onde de la zone de l'organe dans laquelle peuvent être visibles des régions d'intérêt pouvant correspondre à des lésions.

La qualité du traitement des images reconstruites est primordiale afin de garantir une détection des lésions qui soit la plus fiable possible.

### EXPOSE DE L'INVENTION

L'invention répond au besoin d'amélioration de la qualité du traitement des images micro-ondes.

A cet effet, l'invention propose, selon un premier aspect, un procédé de traitement d'images tel que défini par la revendication 1.

L'invention est avantageusement complétée par les caractéristiques suivantes, prises seules ou en une quelconque de leur combinaison techniquement possible :
- le procédé comprend une détermination d'un score de classification pour chaque région d'intérêt, ledit score correspondant à une probabilité de malignité étant la probabilité a posteriori pour la région d'intérêt d'appartenir à la classe des lésions de type malignes ;
- une région d'intérêt est associée à une lésion de type bénigne si la probabilité de malignité est inférieure ou égale à 50% et est associée à une lésion de type maligne si la probabilité de malignité est supérieure à 50% ;
- la deuxième caractéristique est une mesure de la relation spatiale entre l'intensité des pixels de la région d'intérêt selon des directions spécifiques ;
- la troisième caractéristique est une mesure de la relation spatiale entre l'intensité de trois groupes ou plus de pixels voisins de la région d'intérêt ;
- une surface de décision est obtenue au moyen d'un classificateur bayésien naïf ou au moyen d'un classificateur d'analyse discriminante quadratique préalablement entrainés sur des régions d'intérêts d'entrainement ;
- le procédé comprend une étape de traitement de chaque région d'intérêt de manière à affiner le contour de chaque région d'intérêt ;
- le procédé comprend une étape d'obtention d'au moins une image initiale de la zone à imager et une étape de traitement morphologique de chaque image initiale afin d'identifier les régions d'intérêt ;
- le procédé comprend une étape de validation des régions d'intérêts identifiées par évaluation de la persistance des régions d'intérêts sur plusieurs images morphologiques.

L'invention propose selon un deuxième aspect un produit programme d'ordinateur comprenant des instructions de code de programme pour l'exécution des étapes du procédé selon le premier aspect de l'invention, lorsque ce procédé est exécuté par au moins un processeur.

L'invention propose selon un troisième aspect un dispositif d'imagerie médicale comprenant une unité de traitement configurée pour mettre en oeuvre un procédé selon le premier aspect de l'invention.

L'invention permet de séparer dans les images micro-ondes d'une zone de tissus les lésions de type bénignes des lésions de type malignes.

Cette séparation est rendue possible par la combinaison de caractéristiques basées sur la forme et sur la texture avec application à l'imagerie micro-onde.

L'invention est basée sur un nombre limité de caractéristiques incluant au moins un extracteur de forme (en particulier la solidité) et deux caractéristiques de texture (en particulier, la corrélation et l'agitation (en anglais, busyness)) appliqués à des régions d'intérêt identifiées sur les images micro-ondes.

En outre, l'invention tire parti d'un espace de faible dimensionalité : un nombre limité de caractéristiques est extrait, de l'ordre de trois à cinq par exemple, en lien avec le nombre limité de données disponibles, mais aussi afin de mieux appréhender les phénomènes physiques sous-jacents (la forme (au moins un) et l'hétérogénéité (au moins deux) de la région d'intérêt). Compte tenu du faible nombre de caractéristiques, leur choix est crucial et la combinaison des différentes caractéristiques utilisées dans l'invention permet d'améliorer les traitements d'images.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre schématiquement un système d'imagerie médicale à micro-ondes conforme à un mode de réalisation de l'invention ;
- la figure 2 illustre des étapes d'un procédé de traitement de régions d'intérêts d'images 3D micro-ondes selon l'invention ;
- la figure 3a, la figure 3b, la figure 3c, la figure 3d, la figure 3e illustrent des images 3D micro-ondes du sein sur lesquelles des régions d'intérêt sont identifiées et servent de données d'entrée au procédé de traitement selon l'invention ;
- la figure 4a, la figure 4b, la figure 4c et la figure 4d illustrent des surfaces de décision représentées dans un espace 3D selon l'invention.

Sur l'ensemble des figures les éléments similaires portent des références identiques.

### DESCRIPTION DETAILLEE

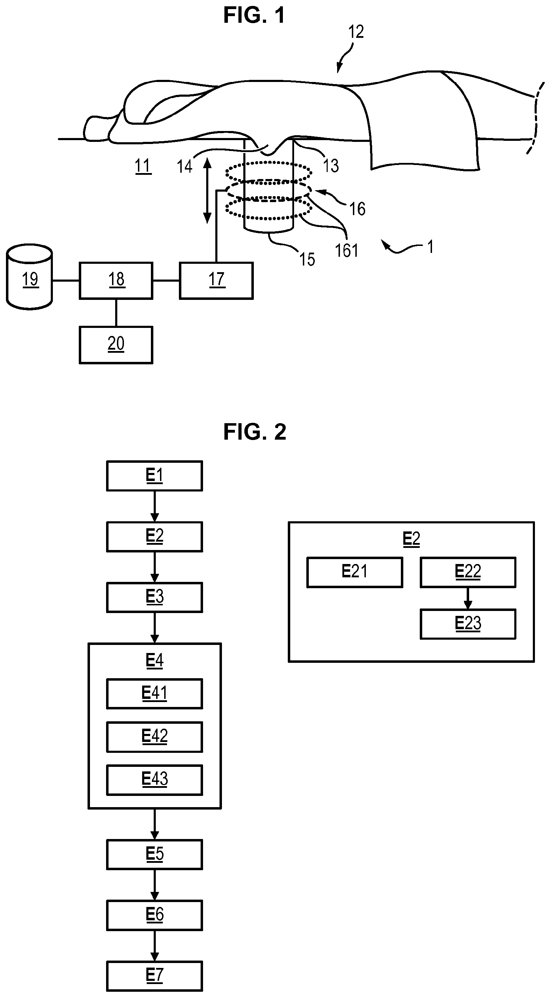

La **figure 1** illustre un dispositif 1 d'imagerie médicale à micro-ondes comprenant une table d'examen 11 sur laquelle une patiente 12 est allongée. En particulier, la patiente 12 est allongée en position couchée sur le ventre. La table d'examen 11 comprend une ouverture 13 de préférence circulaire permettant l'immersion du sein 14 de la patiente dans une cuve 15 remplie d'un liquide de transition biocompatible dont les propriétés diélectriques sont optimisées pour améliorer la transmission des ondes électromagnétiques à l'intérieur du sein.

Un réseau 16 de sondes 161 d'émission/réception micro-ondes (ci-après schématisées par des tirets) est disposé autour de la cuve 15 et permet en émission d'illuminer le milieu observé et en réception de recevoir les signaux réfléchis depuis la scène à imager. Les sondes 161 sont avantageusement régulièrement réparties autour de la cuve et préférentiellement selon un anneau entourant la cuve comme cela est illustré sur la **figure 1****.** Avantageusement, les sondes sont configurées pour émettre des signaux dans la bande de fréquences 0,5 - 6 GHz.

Plus généralement, le système d'imagerie fonctionne de manière multistatique et permet d'illuminer le milieu à imager en exploitant plusieurs sondes en émission et plusieurs sondes en réception et selon différentes configurations autour du milieu à imager. Les sondes peuvent, de manière complémentaire, être configurées pour émettre et recevoir simultanément.

A chaque acquisition multistatique, tout ou partie du milieu à imager est éclairé successivement par des sondes présélectionnées qui fonctionnent en émission. Les sondes en émission du réseau et leur nombre sont choisis en fonction de la zone du sein à imager. Pour chaque sonde qui émet, le signal est reçu par des sondes présélectionnées qui fonctionnent en réception. Les sondes en réception du réseau et leur nombre sont choisis en fonction de la zone du sein à imager. On considère alors que chaque acquisition multistatique correspond à une série d'émissions/réceptions de signaux par des sondes selon une configuration déterminée.

On entend ainsi par configuration la définition d'un ensemble de sondes d'émission et la définition d'un ensemble de sondes de réception permettant d'effectuer une acquisition multistatique de tout ou partie du sein, ces sondes étant disposées d'une certaine manière dans l'espace autour du sein.

Pour passer d'une configuration à une autre et pour piloter les différentes acquisitions multistatiques, le système comprend une unité 17 de pilotage du réseau de sondes qui est connectée à une unité 18 de contrôle et de traitement (par exemple un processeur et/ou un calculateur). Une telle unité 18 de contrôle et de traitement est configurée pour piloter le réseau, procéder aux acquisitions, assurer le stockage des données acquises, effectuer des traitements d'imagerie et mettre en oeuvre un procédé de traitement d'images qui sera décrit ci-après. Une unité 19 de stockage permet de stocker l'ensemble des données multistatiques acquises et un certain nombre de données qui peuvent être utilisées pour les étapes du traitement d'imagerie ou produites par le traitement d'imagerie. En outre, une unité 20 d'affichage permet d'afficher et de visualiser des images obtenues. L'unité 18 de contrôle et de traitement, l'unité 19 de stockage et l'unité 20 d'affichage peuvent être intégrées directement dans l'appareil d'imagerie ou bien déportées physiquement. Les traitements d'imagerie peuvent être réalisés a posteriori (off-line).

Comme on l'aura compris, pour imager l'ensemble du sein plusieurs configurations successives de sondes d'émission et de sondes de réception sont définies. Ces configurations de sondes d'émission et de sondes de réception couvrent des zones différentes du sein à imager et sont choisies de façon à englober au final l'ensemble du sein à imager.

A partir des acquisitions multistatiques des coefficients de transmission entre les sondes d'émission et les sondes de réception réalisées pour les différentes configurations, des images 2D ou 3D micro-ondes du sein sont obtenues.

Pour le traitement des signaux multistatiques d'émission/réception permettant la reconstruction des images 2D ou 3D micro-ondes, on pourra par exemple se référer aux publications suivantes :
- Fear, E.C.; Li, X.; Hagness, S.C.; Stuchly, M.A. Confocal microwave imaging for breast cancer detection: Localization of tumours in three dimensions. IEEE Trans. Biomed. Eng. 2002, 49, 812-822.
- E.J. Bond, X. Li, S.C. Hagness, B.D. Van Veen, Microwave imaging via space-time beamforming for early detection of breast cancer, IEEE Trans. Antennas Propag. 51 (2003). doi:10.1109/TAP.2003.815446.
- Grzegorczyk, T.M.; Meaney, P.M.; Kaufman, P.A.; Paulsen, K.D. Fast 3-D tomographic microwave imaging for breast cancer detection. IEEE Trans. Med. Imaging 2012, 31, 1584-1592
- A. Fasoula, B.M. Moloney, L. Duchesne, J.D.G. Cano, B.L. Oliveira, J. Bernard, M.J. Kerin, Super-resolution radar imaging for breast cancer detection with microwaves: the integrated information selection criteria, in: 41st Annu. Int. Conf. IEEE Eng. Med. Biol. Soc., 2019.

Les images micro-ondes obtenues au moyen du dispositif 1 sont avantageusement exploitées dans le cadre d'un procédé de traitement qui va être décrit ci-après. Un tel procédé est avantageusement mis en œuvre dans une unité de traitement du dispositif 1 d'imagerie médicale.

Une ou plusieurs image(s) micro-ondes d'une zone d'un organe humain notamment d'un sein sont obtenues au moyen du dispositif ci-dessus décrit (étape E1). A ce stade on dispose d'image(s) de la zone à imager appelée(s) image(s) initiale(s) micro-ondes.

A partir d'au moins une image(s) initiale(s) micro-ondes, une ou plusieurs région(s) d'intérêt sont identifiée(s), si existantes (étape E2).

Selon un mode de réalisation, ces régions d'intérêts peuvent être identifiées « à la main » par un praticien sur une ou plusieurs image(s) initiale(s) micro-ondes (étape E21).

Selon un autre mode de réalisation, ces régions d'intérêt, sont avantageusement identifiées en appliquant, sur chaque image initiale micro-ondes, un traitement morphologique (étape E22). Le résultat obtenu est une ou plusieurs image(s) dite(s) morphologique(s) micro-ondes contenant aucune, une ou plusieurs régions d'intérêt identifiée(s). On précise qu'une région d'intérêt est une région de l'image qui est suspecte.

Un tel traitement morphologique consiste notamment à identifier les objets connectés dans l'image en utilisant un procédé de seuillage et à retenir comme régions d'intérêt les objets connectés qui correspondent à un ensemble de caractéristiques morphologiques, notamment, la taille volumétrique de l'objet connecté, le niveau de solidité de l'objet connecté, le niveau d'intensité à l'intérieur de l'objet connecté, le niveau de contraste entre l'intensité à l'intérieur de l'objet connecté et l'intensité à l'intérieur d'autres objets connectés potentiellement identifiés dans la même image, etc. L'utilisation de plusieurs images morphologiques micro-ondes permet de valider l'identification des régions d'intérêts (étape E23) mais bien entendu une seule image peut suffire pour les étapes ultérieures des traitements, nous y reviendrons.

Le but ici étant d'identifier les régions d'intérêts suspectes qui nécessitent une investigation objet des étapes ultérieures. Les étapes ultérieures des traitements s'appliquent à au moins une région d'intérêt identifiée.

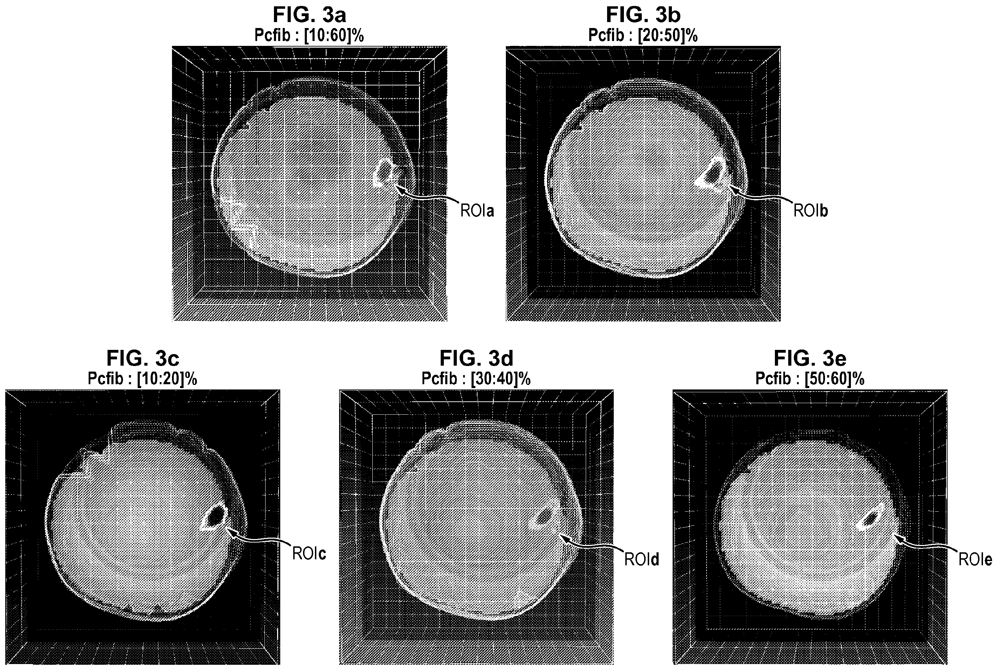

Les **figures 3a, 3b, 3c, 3d** et **3e** illustrent cinq images morphologiques obtenues à partir des images initiales 3D micro-ondes sur lesquelles les traitements morphologiques ci-avant (étape E22) ont été appliqués et sur lesquelles on distingue des régions d'intérêts identifiées ROla, ROlb, ROIc, ROld, ROle. Les images morphologiques des **figures 3a, 3b, 3c, 3d et 3e** sont représentées dans la vue coronale du sein.

L'enjeu des étapes qui vont être décrites est de pouvoir discriminer les lésions de types malignes des lésions de types bénignes à partir des régions d'intérêt qui ont été identifiées dans les images de la zone imagée.

De manière complémentaire, le contour de chaque région d'intérêt présente dans une image est affiné dans le but de le faire mieux correspondre au contour physique de la lésion (étape E3). Pour affiner le contour de chaque région d'intérêt une segmentation dite active est appliquée. A ce titre, on peut se référer, par exemple, au document T.F. Chan, L.A. Vese, Active contours without edges, IEEE Trans. Image Process. (2001). doi:10.1109/83.902291.

Pour chaque région d'intérêt, un nombre limité de caractéristiques sont extraites (étape E4), de l'ordre de trois à cinq dont notamment :
- une caractéristique reliée à la forme : la solidité (en anglais, solidity) (étape E41) ;
- au moins deux caractéristiques reliées à la texture : la corrélation (en anglais, correlation) (étape E42) et l'agitation (en anglais, busyness) (étape E43).

La caractéristique dite solidité (étape E41) mesure la densité, ou la convexité, d'un objet. En particulier, la solidité est calculée comme le rapport entre le volume de l'objet et le volume de l'enveloppe convexe de l'objet. En général, plus la solidité d'une région d'intérêt se rapproche de la valeur maximale de 100%, plus cette région d'intérêt possédera un contour régulier, bien défini et convexe, et plus elle aura une probabilité importante de correspondre à une lésion de type bégnine. Cette notion de contour régulier d'une masse solide correspondant à des lésions de type bégnines est, par exemple, explicitée dans les publications suivantes :
- T.F. de Brito Silva, A.C. de Paiva, A.C. Silva, G. Braz Júnior, J.D.S. de Almeida, Classification of breast masses in mammograms using geometric and topological feature maps and shape distribution, Res. Biomed. Eng. (2020). doi:10.1007/s42600-020-00063-x.
- N. Safdarian, M. Hedyezadeh, Detection and Classification of Breast Cancer in Mammography Images Using Pattern Recognition Methods, Multidiscip. Cancer Investig. (2019). doi:10.30699/acadpub.mci.3.4.13.

D'autres caractéristiques liées à la forme différentes de la solidité comme par exemple la convexité, l'excentricité, la compacité, etc. peuvent aussi être utilisées pour discriminer des formes irrégulières. A ce titre, on peut se référer au document D.A. Khusna, H.A. Nugroho, I. Soesanti, Analysis of shape features for lesion classification in breast ultrasound images, in : AIP Conf. Proc., 2016. Doi :10.1063/1.4958602.

La caractérististique dite corrélation (étape E42) est obtenue par un traitement statistique de l'intensité de la région d'intérêt appartenant à la famille connue sous le nom de matrice de co-occurrence des niveaux de gris (en anglais, Gray-Level Co-occurrence Matrix (GLCM)). Un tel traitement permet d'obtenir des informations sur la texture de la région d'intérêt et mesure la relation spatiale entre l'intensité des pixels selon des directions spécifiques pour mettre en évidence les propriétés d'uniformité, d'homogéneité, de caractére aléatoire et de dépendance linéaire de l'intensité de la région d'intérêt traitée. Un tel traitement est notamment décrit dans les documents :
- R.M. Haralick, I. Dinstein, K. Shanmugam, Textural Features for Image Classification, IEEE Trans. Syst. Man Cybern. (1973). doi:10.1109/TSMC.1973.4309314.
- M. Vallières, C.R. Freeman, S.R. Skamene, I. El Naqa, A radiomics model from joint FDG-PET and MRI texture features for the prediction of lung metastases in soft-tissue sarcomas of the extremities, Phys. Med. Biol. (2015). doi:10.1088/0031-9155/60/14/5471.

D'autres caractéristiques de la famille GLCM comme par exemple le contraste, la dissimilarité, etc, peuvent aussi être utilisées.

La caractéristique dite agitation (étape E43) est obtenue par un traitement statistique de l'intensité de la région d'intérêt appartenant à la famille connue sous le nom de matrice de différence des niveaux de gris de voisinage (en anglais, Neighbourhood Gray Tone Difference Matrix (NGTDM)). Un tel traitement permet d'obtenir des informations sur la texture de la région d'intérêt et mesure la relation spatiale entre trois voisinages ou plus de pixels, en se rapprochant de près de la perception humaine de l'image de la région traitée. De manière complémentaire à la corrélation, la caractéristique d'agitation peut aussi être réliée à l'hétérogénéité de la région d'intérêt, sachant que plus la région d'intérêt sera hétérogène, plus elle aura une probabilité importante de correspondre à une lésion de type maligne. Un tel traitement est notamment décrit dans les documents :
- M. Amadasun, R. King, Textural Features Corresponding to Textural Properties, IEEE Trans. Syst. Man Cybern. (1989). doi:10.1109/21.44046.
- V. Parekh, M.A. Jacobs, Radiomics: a new application from established techniques, Expert Rev. Precis. Med. Drug Dev. (2016). doi:10.1080/23808993.2016.1164013.

D'autres caractéristiques de la famille NGTDM comme par exemple la coarseness (en anglais), la complexité, etc, peuvent aussi être utilisées

C'est la combinaison d'au moins ces trois caractéristiques (solidité, corrélation, agitation) qui permet avantageusement de déterminer si la région d'intérêt a une plus grande probabilité de correspondre à une lésion de type bénigne ou de type maligne. Le raisonnement physique derrière la sélection de ces trois caractéristiques spécifiques de forme et de texture, pour la différentiation entre les lésions bénignes et malignes identifiées à partir des images initiales micro-ondes est le suivant :
- différenciabilité en termes de solidité plus élevée pour les lésions de types benignes comme les kystes simples de forme régulière par exemple vis-àvis d'autres lésions suspectes ;
- différenciabilité en termes de caractéristiques de texture pour les lésions de types benignes comme les fibroadénomes par exemple vis-à-vis des lésions cancéreuses ayant des niveaux de solidité similaires;
- valeurs des caractéristiques de corrélation et d'agitation tendant à être plus élevées dans le cas de lésions malignes, avec des schémas d'intensité moins uniformes et plus hétérogènes ; les deux caractéristiques de texture utilisées ayant un rôle complémentaire en termes d'identification des modèles d'intensité non structurés ;
- valeurs d'agitation élevées ayant tendance à être associées à des schémas de lésions hautement hétérogènes avec des variations spatiales rapides, pouvant indiquer des lésions cancéreuses non massives distribuées, telles que les carcinomes lobulaires infiltrants par exemple.

Ces au moins trois caractéristiques (solidité, corrélation, agitation) sont extraites pour chaque région d'intérêt et permettent de représenter les régions d'intérêt dans un espace au moins tridimensionnel (3D) de caractéristiques (étape E5).

En particulier, pour déterminer si une région d'intérêt est suspecte on la localise dans cet espace 3D (chaque dimension correspondant à chaque caractéristique : solidité, corrélation et agitation).

En particulier, dans cet espace une hypersurface 3D de décision est notamment déterminée (étape E6) au moyen de modèles de classificateurs préalablement entrainés dans l'espace 3D des caractéristiques au moyen de données d'entrainement pour lesquelles on connait déjà si elles correspondent à des régions d'intérêts qui sont associées à des lésions de types malignes ou de type bégniges.

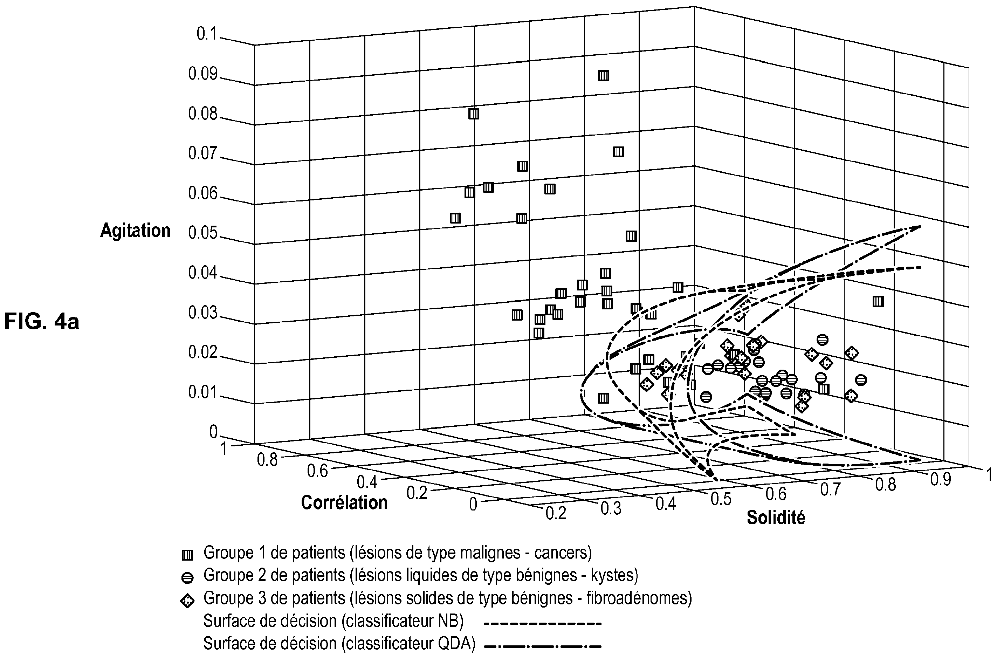

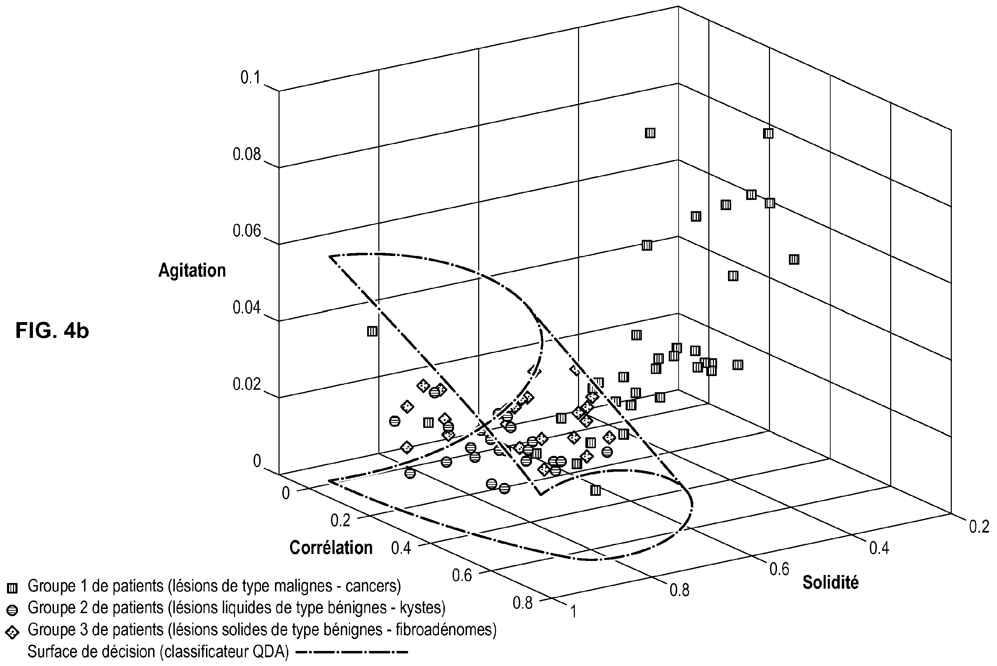

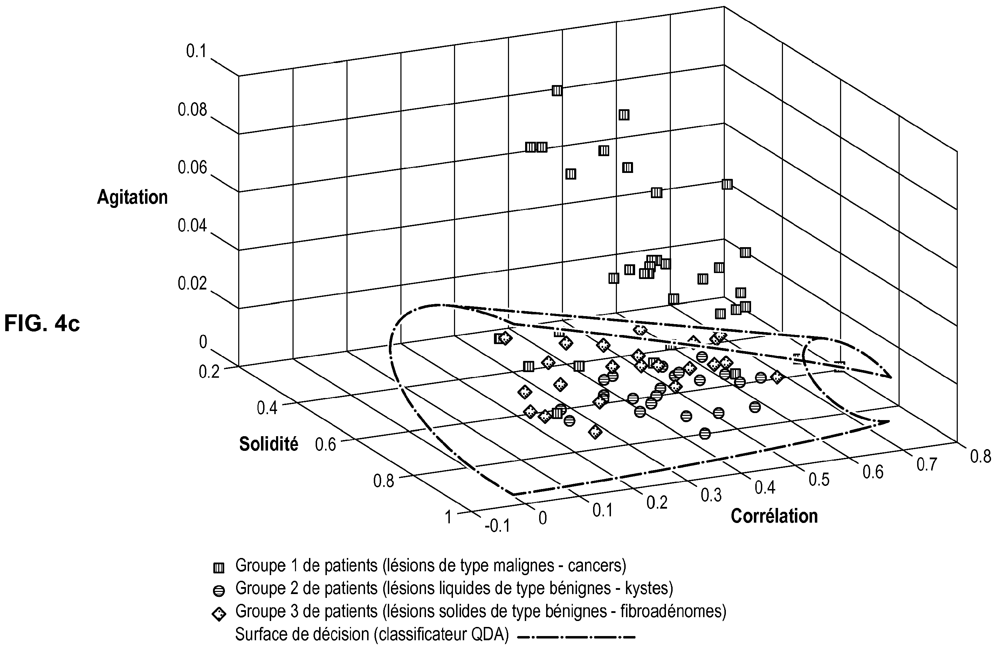

De manière avantageuse, un classificateur bayésien naïf (NB) ou un classificateur d'analyse discriminante quadratique (QDA) sont utilisés et sont entrainés dans l'espace 3D des caractéristiques. Ces classificateurs sont sélectionnés de telle sorte que leur hypersurface de décision partitionne l'espace 3D en deux espaces continus disjoints. Un sous-espace correspond aux lésions de type bénignes: une région d'intérêt localisée dans un tel sous-espace sera alors considérée comme associée à une lésion bénigne. Le deuxième sous-espace correspond aux lésions de type malignes: une région d'intérêt localisée dans un tel sous-espace sera alors considérée comme associée à une lésion maligne. La **figure 4a** illustre les surfaces de décision de chacun de ces deux classificateurs. Les **figures 4b** et **4c** illustrent la surface de décision du classificateur d'analyse discriminante quadratique (QDA) vue sous différents angles (pour différents placements des axes de corrélation et de solidité). Sur ces figures sont également représentées les données d'entrainement de plusieurs groupes de patientes.

En fonction de la localisation et de la distance de la région d'intérêt par rapport à la surface de décision dans l'espace 3D des caractéristiques, un score de classification est calculé (étape E7) qui correspond à une probabilité dite de malignité. Cette probabilité de malignité est la probabilité a posteriori pour la région d'intérêt d'appartenir à la classe des lésions de type malignes. Cette probabilité de malignité est égale à 50% pour une région d'intérêt localisée sur la surface de décision. Dans le cas d'une région d'intérêt localisée dans le sous-espace correspondant aux lésions de type bénignes, plus cette région d'intérêt sera éloignée de la surface de décision, plus sa probabilité de malignité sera faible. Dans le cas d'une région d'intérêt localisée dans le sous-espace correspondant aux lésions de type malignes, plus cette région d'intérêt sera éloignée de la surface de décision, plus sa probabilité de malignité sera importante. Lorsque la probabilité de malignité est inférieure à 50% alors la région d'intérêt est associée à une lésion de type bénigne. Lorsque cette probabilité est supérieure à 50% alors la région d'intérêt est associée à une lésion de type maligne.

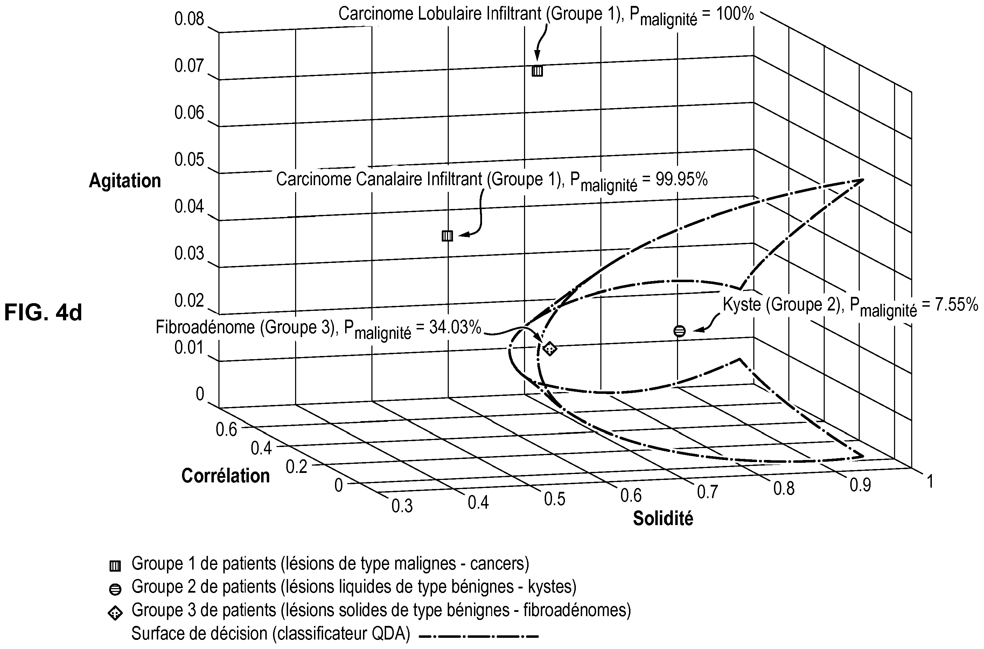

La **figure 4d** illustre des scores pour des régions d'intérêts correspondant à plusieurs types de lésions chez différents patients. Sur cette figure on constate une différenciabilité nette du kyste simple benin (groupe 2) en termes de solidité plus élevée. Le fibroadénome bénin (groupe 3) et les deux lésions cancéreuses malignes (groupe 1) ont des niveaux de solidité similaires, cependant une distinction claire est faite entre cette lésion bénigne et ces deux lésions malignes en termes de caractéristiques de texture, les valeurs de corrélation et d'agitation augmentant dans le cas des deux lésions malignes, l'augmentation étant plus notable concernant l'agitation. Notamment, une valeur d'agitation importante est associée à des types de lésions plus hétérogènes, qui peuvent être réliées à des formes plus distribuées comme les carcinomes lobulaires infiltrants (groupe 1).

### Validation basée sur un critère de persistance d'au moins une région d'intérêt préalablement identifiée à partir des images radar micro-ondes

On décrit ici un mode de réalisation particulier pour valider morphologiquement des régions d'intérêt, préalablement identifiées dans des images radar micro-ondes.

En particulier, ici il s'agit d'obtenir à l'issue de l'étape E1 plusieurs images radar micro-ondes de la zone du corps imagée.

L'acquisition à l'étape E1 est mise en oeuvre pour P > 1 configuration(s) du réseau de sondes, de manière à pouvoir englober l'ensemble du sein à imager et reconstruire, par la suite, une image radar 3D du sein.

En particulier, pour chaque configuration, une acquisition multistatique des coefficients de transmission mesurés entre les sondes émettrices et les sondes réceptrices est réalisée. On dispose alors de plusieurs acquisitions multistatiques (P > 1 acquisitions multistatiques).

Ensuite, les signaux acquis pour chaque configuration sont traités afin d'obtenir des images radar élémentaires micro-ondes pour chacune des configurations.

En particulier, pour traiter ces signaux on considère plusieurs ensembles (N > 1 ensembles) de Ai valeurs (Ai > 1 valeurs, avec 1 *≤ i* ≤ *N*) d'un paramètre pcfib.

On a alors ${\sum }_{i = 1}^{N} Ai$ valeurs de paramètres pcfib par configuration. Ainsi, on obtient à partir des signaux de chaque acquisition multistatique ${\sum }_{i = 1}^{N} Ai$ images radar élémentaires micro-ondes chacune ayant été obtenue pour une valeur du paramètre pcfib. L'idée ici est d'obtenir des images élémentaires selon différentes hypothèses sur le milieu traversé par les ondes électromagnétiques.

On précise en effet qu'un tel paramètre pcfib correspond à une hypothèse sur la constitution moyenne du milieu traversé par l'onde électromagnétique dans le sein (ou de manière plus générale, la zone imagée) en termes de permittivité diélectrique. Ce paramètre pcfib correspond à un pourcentage de mélange de tissus fibro-glandulaires et de tissus adipeux du sein. Par exemple pcfib = 30% correspond à un milieu contenant 30% de tissus fibro-glandulaires et 70% de tissus adipeux. Les propriétés diélectriques du tissu mammaire sont alors définies comme une moyenne pondérée (pondération par pcfib) des propriétés diélectriques des tissus fibro-glandulaires et des tissus adipeux. Pour des exemples de valeurs des permittivités diélectriques des tissus fibro-glandulaires et des tissus adipeux du sein, on pourra par exemple se référer aux publications suivantes :
- T. Sugitani, S.I. Kubota, S.I. Kuroki, K. Sogo, K. Arihiro, M. Okada, T. Kadoya, M. Hide, M. Oda, T. Kikkawa, Complex permittivities of breast tumor tissues obtained from cancer surgeries, Appl. Phys. Lett. (2014). doi:10.1063/1.4885087;
- M. Lazebnik, L. McCartney, D. Popovic, C.B. Watkins, M.J. Lindstrom, J. Harter, S. Sewall, A. Magliocco, J.H. Booske, M. Okoniewski, S.C. Hagness, A large-scale study of the ultrawideband microwave dielectric properties of normal breast tissue obtained from reduction surgeries, Phys. Med. Biol. (2007). Doi :10.1088/0031-9155/52/10/001.

De manière avantageuse, les ensembles de valeurs du paramètre pcfib se recoupent totalement ou partiellement en termes de variation et/ou en termes de valeurs.

Par exemple, on peut avoir un ensemble comprenant les valeurs 10%, 20% et un autre ensemble comprenant les valeurs 5%, 15% 25%. Dans cet exemple on a un ensemble dont les valeurs varient entre 10% et 20% et un autre ensemble dont les valeurs varient entre 5% et 25%. Ces deux ensembles ont donc une plage de variation commune entre 10% et 20%.

Dans un autre exemple, on peut avoir un ensemble comprenant les valeurs 10%, 20% et un autre ensemble comprenant les valeurs 20%, 25%, 30%. Dans cet exemple les ensembles possèdent une valeur en commun, 20%.

Dans encore un autre exemple, on peut avoir un ensemble comprenant les valeurs 10%, 20%, 25% et un autre ensemble comprenant les valeurs 5% 10% 30%. Dans cet exemple, ces deux ensembles ont une plage de variation commune entre 10% et 25% et une valeur commune 10%.

On considère au moins deux ensembles de valeurs du paramètre pcfib dont un ensemble pouvant avoir une plage de variation des valeurs du paramètre pcfib plus large que la plage de variation de l'autre ensemble. Ici les termes large et étroit sont des termes relatifs qui s'entendent en comparant les plages de variation. L'idée ici est d'avoir des recoupements entre les ensembles de valeurs.

Le choix des plages de variation du paramètre pcfib pour les différents ensembles est effectué en lien avec la variabilité existante en termes de compositions et de densité des seins.

De manière avantageuse, des plages de variation larges conduisent à des images comprenant une représentation plus complète de la région d'intérêt et les plages de variation étroites conduisent potentiellement à des représentations partielles des lésions détectables.

Par exemple, dans le cadre de l'imagerie du sein on peut choisir N=5 ensembles de variation :
- trois ensembles avec des plages de variation étroites :
   ∘ entre 10% et 20%, le paramètre pcfib prenant par exemple les valeurs suivantes dans cette plage :10%, 15%, 20%
   ∘ entre 30% et 40%, le paramètre pcfib prenant par exemple les valeurs suivantes dans cette plage : 30%, 35%, 40%
   ∘ entre 50% et 60%, le paramètre pcfib prenant par exemple les valeurs suivantes dans cette plage : 50%, 55%, 60%
- deux ensembles avec des plages de variation larges :
   ∘ entre 20% et 50 %, le paramètre pcfib prenant par exemple les valeurs suivantes dans cette plage : 20%, 25%, 30%, 35%, 40%, 45%, 50%
   ∘ entre 10% et 60%, le paramètre pcfib prenant par exemple les valeurs suivantes dans cette plage : 10%, 15%, 20%, 25%, 30%, 35%, 40%, 45%, 50%, 55%, 60%

Pour chaque configuration, une image radar élémentaire micro-ondes est sélectionnée pour chaque ensemble et correspond à une des valeurs du paramètre (pcfib) de l'ensemble ; pour chaque configuration, une image élémentaire par ensemble est donc sélectionnée. Dans l'exemple précédent, on a alors cinq images élémentaires par configuration (une image élémentaire par ensemble) qui vont être utilisées pour la reconstruction.

Une telle sélection consiste notamment à utiliser des critères de focalisation d'image (en anglais, image focusing metrics) tels que, par exemple, les critères décrits dans les documents suivants :
- S. Pertuz, D. Puig, M.A. Garcia, Analysis of focus measure operators for shape-from-focus, Pattern Recognit. (2013). doi : 10.1016/j.patcog.2012.11.011.
- O'loughlin, D.; Krewer, F.; Glavin, M.; Jones, E.; O'halloran, M. Focal quality metrics for the objective evaluation of confocal microwave images. Int. J. Microw. Wirel. Technol. 2017, 9, 1365-1372. Doi :10.1017/S1759078717000642.

On note que d'une configuration à l'autre, la sélection de l'image élémentaire pour un même ensemble donné peut avoir été effectuée avec des valeurs différentes du paramètre pcfib appartenant à cet ensemble.

A partir des images élémentaires obtenues pour les différentes configurations, une image radar 2D ou 3D de la zone imagée est reconstruite pour chacun des ensembles. Ainsi, on dispose d'une image radar reconstruite par ensemble de valeurs de pcfib. Ainsi, à ce stade, on dispose de plusieurs images initiales, une par ensemble de valeurs de pcfib.

Sur chaque image radar micro-ondes ainsi reconstruite de la zone imagée est appliqué un traitement morphologique de manière à détecter des régions d'intérêt, si existantes (voir étape E22 ci-dessus).

Le résultat obtenu est une image dite morphologique micro-ondes contenant aucune, une ou plusieurs régions d'intérêt identifiée(s). A ce stade, on dispose alors de plusieurs images morphologiques du sein, chaque image morphologique étant obtenue par ensemble de valeurs de pcfib ; chaque image morphologique contenant aucune, une ou plusieurs régions d'intérêt identifiée(s).

De manière préférée, le traitement morphologique est basé sur le critère de solidité (voir définition ci-avant). En pratique la solidité d'une région d'intérêt doit dépasser un niveau donné pour que cette région d'intérêt puisse être identifiée dans une image morphologique d'un ensemble donné.

Puis, la persistance de chaque région d'intérêt préalablement identifiée est évaluée sur les différentes images morphologiques (étape E23). L'objectif est de valider morphologiquement les régions d'intérêt qui sont persistantes pour plusieurs hypothèses sur le milieu traversé par les ondes électromagnétiques. On entend par évaluation de la persistance le fait d'avoir sur plusieurs images morphologiques la présence d'une région d'intérêt localisée en 3D dans une même zone. Ici on va évaluer si des régions d'intérêt identifiées par le traitement morphologique se trouvent sur plusieurs images dans une même zone. Une telle évaluation consiste notamment à utiliser des critères comme, par exemple, le regroupement spatial (en anglais, spatial clustering criterion) pour associer entre elles les régions d'intérêt détectées.

La persistance permet donc de valider morphologiquement des régions d'intérêt identifiées, c'est-à-dire leur association à des objets physiques si ces régions d'intérêt sont présentes sur une proportion déterminée du nombre d'images morphologiques.

La persistance permet donc de valider au moyen de plusieurs images morphologiques des régions d'intérêt préalablement identifiées. Les régions d'intérêts préalablement identifiées sur les images morphologiques et qui ont été validées au moyen de la persistance étant ensuite utilisées pour mettre en œuvre les étapes suivantes des traitements.

Ensuite, on applique les étapes E3 à E7 précédemment décrites sur les régions d'intérêts préalablement identifiées et qui ont été validées au moyen de la persistance.

## Revendications

1. Procédé de traitement d'images médicales micro-ondes de tissus humains d'une zone du corps d'un patient, mis en œuvre par ordinateur comprenant les étapes suivantes :
- identification (E2) d'au moins une région d'intérêt à partir d'au moins une image initiale micro-ondes d'une zone du corps d'un patient
- traitement (E4) de chaque région d'intérêt identifiée sur une image de manière à déterminer (E41, E42, E43) de trois à cinq caractéristiques relatives à la région d'intérêt dont :
- une première caractéristique de forme relative à la solidité de chaque région d'intérêt ;
- une deuxième et troisième caractéristiques relatives à la texture de chaque région d'intérêt la deuxième étant la corrélation et la troisième étant l'agitation; les première, deuxième et troisième caractéristiques étant des coordonnées caractérisant chaque région d'intérêt ;
- localisation (E5) dans un espace à au moins trois dimensions dont les dimensions sont respectivement au moins la première, la deuxième et la troisième caractéristique, de chaque région d'intérêt à partir de ses coordonnées, l'espace étant partitionné par une hypersurface de décision en deux sous-espaces continus et disjoints, un sous-espace tel qu'une région d'intérêt y étant localisée est associée à une lésion bénigne, un autre sous-espace tel qu'une région d'intérêt y étant localisée est associée à une lésion maligne.

2. Procédé selon la revendication 1, comprenant les étapes suivantes
- obtention de plusieurs images initiales micro-ondes d'une zone du corps du patient, au moins une région d'intérêt étant identifiée sur chaque image initiale ;
- évaluation de la persistance de chaque région d'intérêt sur images initiales micro-ondes de manière à valider chaque région d'intérêt, l'évaluation de la persistance consistant à évaluer si des régions d'intérêts se trouvent sur plusieurs images morphologiques dans une même zone.

3. Procédé selon la revendication 2, dans lequel chaque image initiale correspond à une valeur d'un paramètre (pcfib) caractéristique des propriétés diélectriques des tissus humains imagés.

4. Procédé selon l'une des revendications 1 à 2, comprenant une détermination d'un score de classification pour chaque région d'intérêt, ledit score correspondant à une probabilité de malignité étant la probabilité a posteriori pour la région d'intérêt d'appartenir à la classe des lésions de type malignes.

5. Procédé selon la revendication 3, dans lequel une région d'intérêt est associée à une lésion de type bénigne si la probabilité de malignité est inférieure ou égale à 50% et est associée à une lésion de type maligne si la probabilité de malignité est supérieure à 50%.

6. Procédé selon l'une des revendications précédentes, dans lequel la deuxième caractéristique est une mesure de la relation spatiale entre l'intensité des pixels de la région d'intérêt selon des directions spécifiques.

7. Procédé selon l'une des revendications précédentes, dans lequel la troisième caractéristique est une mesure de la relation spatiale entre l'intensité de trois groupes ou plus de pixels voisins de la région d'intérêt.

8. Procédé selon l'une des revendications précédentes, dans lequel une surface de décision est obtenue au moyen d'un classificateur bayésien naïf ou au moyen d'un classificateur d'analyse discriminante quadratique préalablement entrainés sur des régions d'intérêts d'entrainement.

9. Procédé selon l'une des revendications précédentes, comprenant une étape de traitement (E3) de chaque région d'intérêt de manière à affiner le contour de chaque région d'intérêt.

10. Procédé selon l'une des revendications précédentes, dans lequel la zone du corps du patient est un sein.

11. Dispositif d'imagerie médicale comprenant une unité (18) de traitement configurée pour mettre en œuvre un procédé selon l'une des revendications précédentes.

## Patentansprüche

1. Computergestütztes Verfahren zur Verarbeitung von medizinischen Mikrowellenbildern von menschlichen Geweben eines Bereichs des Körpers eines Patienten, das die folgenden Schritte umfasst:
- Identifizieren (E2) mindestens einer Region von Interesse anhand von mindestens einem Mikrowellen-Ausgangsbild eines Bereichs des Körpers eines Patienten
- Verarbeiten (E4) jeder auf einem Bild identifizierten Region von Interesse, um drei bis fünf Merkmale zu ermitteln (E41, E42, E43), die sich auf die Region von Interesse beziehen, darunter:
- ein erstes Formmerkmal, das sich auf die Festigkeit jeder Region von Interesse bezieht;
- ein zweites und drittes Merkmal, die sich auf die Textur jeder Region von Interesse beziehen, wobei das zweite die Korrelation ist und das dritte die Unruhe ist; wobei das erste, zweite und dritte Merkmal Koordinaten sind, die jede Region von Interesse charakterisieren;
- Lokalisieren (E5) jeder Region von Interesse anhand ihrer Koordinaten in einem mindestens dreidimensionalen Raum, dessen Dimensionen jeweils mindestens das erste, das zweite und das dritte Merkmal sind, wobei der Raum durch eine Entscheidungshyperfläche in zwei kontinuierliche und disjunkte Unterräume unterteilt ist, wobei ein Unterraum, in dem sich eine Region von Interesse befindet, einer gutartigen Läsion zugeordnet ist, und ein anderer Unterraum, in dem sich eine Region von Interesse befindet, einer bösartigen Läsion zugeordnet ist.

2. Verfahren nach Anspruch 1, das die folgenden Schritte umfasst:
- Erhalten mehrerer Mikrowellen-Ausgangsbilder eines Bereichs des Körpers des Patienten, wobei mindestens eine Region von Interesse auf jedem Ausgangsbild identifiziert wird,
- Bewerten der Persistenz jeder Region von Interesse auf Mikrowellen-Ausgangsbildern, so dass jede Region von Interesse validiert wird, wobei die Bewertung der Persistenz darin besteht zu bewerten, ob sich Regionen von Interesse auf mehreren morphologischen Bildern im gleichen Bereich befinden.

3. Verfahren nach Anspruch 2, wobei jedes Ausgangsbild einem Wert eines Parameters (pcfib) entspricht, der für die dielektrischen Eigenschaften der abgebildeten menschlichen Gewebe charakteristisch ist.

4. Verfahren nach einem der Ansprüche 1 bis 2, umfassend eine Bestimmung eines Klassifizierungs-Scores für jede Region von Interesse, wobei der Score, der einer Malignitäts-Wahrscheinlichkeit entspricht, die die A-posteriori-Wahrscheinlichkeit für die Region von Interesse ist, zu der Klasse der bösartigen Läsionen zu gehören.

5. Verfahren nach Anspruch 3, wobei eine Region von Interesse einer gutartigen Läsion zugeordnet wird, wenn die Wahrscheinlichkeit einer Malignität kleiner oder gleich 50 % ist, und einer bösartigen Läsion zugeordnet wird, wenn die Wahrscheinlichkeit einer Malignität größer als 50 % ist.

6. Verfahren nach einem der vorstehenden Ansprüche, wobei das zweite Merkmal ein Maß für die räumliche Beziehung zwischen der Intensität der Pixel der Region von Interesse in bestimmten Richtungen ist.

7. Verfahren nach einem der vorstehenden Ansprüche, wobei das dritte Merkmal ein Maß für die räumliche Beziehung zwischen der Intensität von drei oder mehr Gruppen benachbarter Pixel der Region von Interesse ist.

8. Verfahren nach einem der vorstehenden Ansprüche, wobei eine Entscheidungsfläche mittels eines naiven Bayes-Klassifikators oder mittels eines Klassifikators für quadratische Diskriminanzanalyse erhalten wird, die zuvor anhand von Trainings-Regionen von Interesse trainiert wurden.

9. Verfahren nach einem der vorstehenden Ansprüche, umfassend einen Verarbeitungsschritt (E3) jeder Region von Interesse, um die Kontur jeder Region von Interesse zu verfeinern.

10. Verfahren nach einem der vorstehenden Ansprüche, wobei der Bereich des Körpers des Patienten eine Brust ist.

11. Medizinische Bildgebungsvorrichtung, umfassend eine Verarbeitungseinheit (18), die zur Durchführung eines Verfahrens nach einem der vorstehenden Ansprüche konfiguriert ist.

## Claims

1. A method for processing microwave medical images of human tissues of a zone of the body of a patient and in particular of the breast, implemented by computer and comprising the following steps:
- identifying (E2) at least one region of interest from at least one initial microwave image of a zone of the body of a patient;
- processing (E4) each region of interest identified in an image for determining (E41, E42, E43) only three to five characteristics relating to the region of interest:
- a first shape characteristic, including one relating to the solidity of each region of interest;
- a second and third characteristic relating to the texture of each region of interest, two of which being the correlation and the busyness; the first, second and third characteristics being coordinates characterising each region of interest;
- locating (E5), in a space of at least three dimensions, the dimensions of which are at least the first, second and third characteristic, respectively, of each region of interest based on its coordinates, the space being partitioned by a decision hypersurface into two continuous and separate sub-spaces, one sub-space such that a region of interest located therein is associated with a benign lesion, and another sub-space such that a region of interest located therein is associated with a malignant lesion.

2. The method according to claim 1, comprising the steps following
- obtaining a plurality of initial microwave images of an area of the patient's body, with at least one region of interest identified on each initial image;
- assessing the persistence of each region of interest across the initial microwave images in order to validate each region of interest, the persistence assessment comprising determining whether regions of interest are present in multiple morphological images within the same area.

3. A method according to claim 2, wherein each initial image corresponds to a value of a parameter (pcfib) characteristic of the dielectric properties of the human tissues imaged.

4. A method according to one of claims 1 to 2, comprising determining a classification score for each region of interest, said score corresponding to a probability of malignancy, which is the posterior probability that the region of interest belongs to the class of malignant-type lesions.

5. A method according to claim 3, in which a region of interest is classified as a benign lesion if the probability of malignancy is less than or equal to 50 per cent and is classified as a malignant lesion if the probability of malignancy is greater than 50 per cent.

6. A method according to one of the preceding claims, wherein the second feature is a measure of the spatial relationship between the intensity of the pixels in the region of interest along specific directions.

7. A method according to one of the preceding claims, wherein the third feature is a measure of the spatial relationship between the intensity of three or more groups of neighbouring pixels in the region of interest.

8. A method according to one of the preceding claims, wherein a decision surface is obtained by means of a naive Bayesian classifier or by means of a quadratic discriminant analysis classifier previously trained on training regions of interest.

9. A method according to one of the preceding claims, comprising a step (E3) of processing each region of interest so as to refine the contour of each region of interest.

10. A method according to one of the preceding claims, in which the area of the patient's body is a breast.

11. A medical imaging device comprising a processing unit (18) configured to implement a method according to one of the preceding claims.
